# EUROPEAN PATENT APPLICATION

(11) **EP 3 261 042 A1**
(43) Date of publication of application: **27.12.2017**
(21) Application number: 15882810.3
(22) Date of filing: 11.12.2015
(51) Int. Cl.: G06Q 30/02, H04W 4/12

(54) **SERVER, METHOD OF CONTROLLING SAME, AND RECORDING MEDIA HAVING COMPUTER PROGRAM RECORDED THEREON**

(30) Priority: 16.02.2015 KR 20150023536
(71) Applicant: SK Planet Co., Ltd., Seongnam-si, Gyeonggi-do 13487 (KR)
(72) Inventor: JEON, Ho Keun, Seoul 02830 (KR); JOO, Min Sok, Seongnam-si Gyeonggi-do 13481 (KR); LEE, Eun Bok, Seoul 05672 (KR); JUNG, Ki Hyun, Seoul 06217 (KR)
(74) Representative: Isarpatent
(86) International application number: PCT/KR2015/013580
(87) International publication number: WO 2016/133277

(57) **Abstract**

Provided are a server, a control method thereof, and a non-transitory computer readable storage medium having a computer program recorded thereon. That is, according to the present invention, when a purchase intension on a promotion product is recognized in advance through a prior walk-in process or even when the promotion product is recognized without having a walk-in process, a reward function such as a point accumulating function, a discount function, or a discount coupon providing function is provided based on promotion product information purchased by the terminal, so that an advertiser provides reward only when a customer who is a promotion target surely recognized the product of the advertiser and purchases the product or the customer recognizes the product after purchasing the product so that the advertising effect is confirmed and is maximized. Further, the customer may be conveniently provided with the reward by removing cumbersome and inconvenient process such as a paper coupon or a receipt coupon.

## Description

### BACKGROUND OF THE INVENTION

### 1. Field of the Invention

The present invention relates to a server, a control method thereof, and a non-transitory computer readable storage medium having a computer program recorded thereon, and more particularly, to a server which provides a reward function such as a point accumulating function, a discount function, or a discount coupon providing function based on promotion product information purchased by a terminal when a purchase intension on a promotion product is recognized in advance through a prior walk-in process or even when the promotion product is recognized without having a walk-in process, a control method thereof, and a non-transitory computer readable storage medium having a computer program recorded thereon.

### 2. Description of the Related Art

A point accumulating method is a method which inputs a universal code or a random number printed on a coupon by a user who purchases a promotion product through a paper coupon, a receipt coupon, and an electronic receipt and only when the input universal code or random number is certified, accumulates the point in a terminal of the user who purchases the promotion product.

According to the above-mentioned point accumulating method, the paper coupon needs to be separately recognized for every product through a POS or a coupon printed on a product wrapping paper is separated to be collected through a collecting box.

Further, according to the above-mentioned point accumulating method, in the case of the receipt coupon, information on the promotion product is included in the universal code or the random number to be output onto the receipt and the customer inputs the universal code or the random number of the receipt through the terminal of the user to receive a reward for the product. Therefore, it is difficult for a manufacturer or a distributor to figure out a marketing effect indicating whether the customer recognizes a product to purchase the product or simply purchases the product. Further, it is inconvenient for the customer to separately input (or recognize) the universal code or random number.

According to the above-described point accumulating method, the marketing effect is lowered in view of an advertiser. Further, a receipt recognizing process needs to be necessarily performed, which may add inconvenient to the customer.

### [Related Art Document]

### [Patent Document]

Korean Unexamined Patent Application Publication No. 10-2014-0032560 (entitled System and method for providing point accumulating service using receipt)

### SUMMARY OF THE INVENTION

An object of the present invention is to provide a server which provides a reward function such as a point accumulating function, a discount function, or a discount coupon providing function based on promotion product information purchased by a terminal when a purchase intension on a promotion product is recognized in advance through a prior walk-in process or even when the promotion product is recognized without having a walk-in process, a control method thereof, and a non-transitory computer readable storage medium having a computer program recorded thereon

According to an aspect of the present invention, a server includes a storage unit which stores a plurality of promotion product confirmation information transmitted respectively from a plurality of terminals, in response to promotion product information which is provided to the plurality of terminals; a communication unit which receives customer information and purchase information for a first terminal which are transmitted from a POS terminal when transaction of the promotion product is performed; and a control unit which checks whether the received customer information is included in the plurality of promotion product confirmation information stored in the storage unit and controls the communication unit to transmit first product purchase reward information including at least one of an accumulated point amount, a discounted amount, and a store discount coupon amount through an access route included in the promotion product confirmation information corresponding to the customer information to the first terminal, as a push message when the customer information is included in the plurality of promotion product confirmation information as a checking result.

In an embodiment of the present invention, the promotion product information may include at least one of a manufacturer name, a promotion product name, a promotion product ID, a promotion product image, a store, a point providing company, an accumulated point amount, a discounted amount, a validation date, and a usage period.

In an embodiment of the present invention, the promotion product confirmation information may include at least one of a customer ID, a promotion product ID, an access route, an access location, and access time.

In an embodiment of the present invention, the customer information may include at least one of a name, a phone number, a point card number, and identification information of the terminal.

In an embodiment of the present invention, the purchase information may include at least one of a store, a promotion product ID, a receipt unique number, a purchasing time, and a customer ID.

In an embodiment of the present invention, as the checking result, when the customer information is not included in the plurality of promotion product confirmation information, the control unit may control the communication unit to transmit reward guidance information for a reward according to a promotion product purchase to the first terminal based on the customer information as a push message.

In an embodiment of the present invention, when a predetermined application is installed or executed in the first terminal, the control unit may transmit the promotion product information formed by a catalog to the first terminal through the communication unit, receive the promotion product response information transmitted from the first terminal in response to the transmitted promotion product information through the communication unit, and transmit second product purchase reward information including at least one of the accumulated point amount, the discounted amount, and the store discount coupon amount through the access route included in the promotion product response information to the first terminal as a push message based on the received promotion product response information, through the communication unit, the promotion product response information may include at least one of a customer ID, a promotion product ID, an access route, an access location, and access time, and a benefit of the first product purchase reward information may be higher than a benefit of the second product purchase reward information.

According to another aspect of the present invention, a control method of a server includes transmitting promotion product information to the terminal, by means of a communication unit; receiving promotion product confirmation information transmitted from the terminal in response to the transmitted promotion product information, by means of the communication unit; receiving customer information and purchase information for a first terminal which are transmitted from a POS terminal when transaction of the promotion product is performed, by means of the communication unit; checking whether the received customer information is included in a plurality of promotion product confirmation information including the received promotion product confirmation information which is stored in advance in a storage unit, by means of the control unit; and controlling the communication unit to transmit first product purchase reward information including at least one of an accumulated point amount, a discounted amount, and a store discount coupon amount through an access route included in the promotion product confirmation information corresponding to the customer information to the first terminal, as a push message, by means of the control unit, when the customer information is included in the plurality of promotion product confirmation information as a checking result.

In an embodiment of the present invention, the control method may furhter include: controlling the communication unit to transmit reward guidance information for a reward according to a promotion product purchase to the first terminal based on the customer information as a push message, by means of the control unit, when the customer information is not included in the plurality of promotion product confirmation information as the checking result; transmitting the promotion product information formed by a catalog to the first terminal, by means of the communication unit, when a predetermined application is installed or executed in the first terminal; receiving promotion product confirmation information transmitted from the first terminal in response to the transmitted promotion product information, by means of the communication unit; and controlling the communication unit to transmit second product purchase reward information including at least one of the accumulated point amount, the discounted amount, and the store discount coupon amount through the access route included in the promotion product response information to the first terminal as a push message based on the received promotion product response information, by means of the control unit.

According to another aspect of the present invention, a computer program executing the methods according to the aforementioned embodiments may be stored in a non-transitory computer readable storage medium having a computer program recorded thereon.

According to still another aspect of the present invention, a server includes: a storage unit which stores a plurality of promotion product confirmation information transmitted respectively from a plurality of terminals, in response to promotion product information which is provided to the plurality of terminals; a communication unit which receives a random number or a universal code included in a receipt issued from a POS terminal and customer information which are transmitted from a first terminal after performing transaction on a promotion product; and a control unit which controls the communication unit to transmit product purchase reward information including at least one of an accumulated point amount, a discounted amount, and a store discount coupon amount through an access route included in the promotion product confirmation information corresponding to the customer information to the first terminal, as a push message, when the customer information is included in the plurality of promotion product confirmation information stored in the storage unit.

In an embodiment of the present invention, the receipt may further include the guidance information including at least one of information on a point accumulating method, information in point discount, information on a store discount coupon, information on an application downloading method related to the store, information on application benefit related to the store, information on an application downloading method of another company, and information on application benefit of another company.

According to the present invention, when a purchase intension on a promotion product is recognized in advance through a prior walk-in process or even when the promotion product is recognized without having a walk-in process, a reward function such as a point accumulating function, a discount function, or a discount coupon providing function is provided based on promotion product information purchased by the terminal, so that an advertiser provides reward only when a customer who is a promotion target surely recognized the product of the advertiser and purchases the product or the customer recognizes the product after purchasing the product so that the advertising effect is confirmed and is maximized. Further, the customer may be conveniently provided with the reward by removing cumbersome and inconvenient process such as a paper coupon or a receipt coupon.

### BRIEF DESCRIPTION OF THE DRAWINGS

FIG. 1 is a block diagram illustrating a configuration of a product selling system according to an embodiment of the present invention.
FIG. 2 is a block diagram illustrating a configuration of a terminal according to an embodiment of the present invention.
FIG. 3 is a block diagram illustrating a configuration of a server according to an embodiment of the present invention.
FIG. 4 is a flowchart illustrating a control method of a product selling system including a server according to a first exemplary embodiment of the present invention.
FIG. 5 is a view illustrating a screen of a terminal according to an embodiment of the present invention.
FIG. 6 is a flowchart illustrating a control method of a product selling system including a server according to a second exemplary embodiment of the present invention.
FIG. 7 is a flowchart illustrating a control method of a product selling system including a server according to a third exemplary embodiment of the present invention.
FIG. 8 is a flowchart illustrating a control method of a product selling system including a server according to a fourth exemplary embodiment of the present invention.

### DETAILED DESCRIPTION OF THE PREFERRED EMBODIMENTS

It is noted that technical terms used in the present invention are used to just describe a specific embodiment and do not intend to limit the present invention. Further, if the technical terms used in the present invention are not particularly defined as other meanings in the present invention, the technical terms should be appreciated as meanings generally appreciated by those skilled in the art and should not be appreciated as excessively comprehensive meanings or excessively reduced meanings. Further, when the technical term used in the present invention is a wrong technical term that does not accurately express the spirit of the present invention, the technical term should be understood by being substituted by a technical term which can be correctly understood by those skilled in the art. In addition, a general term used in the present invention should be interpreted as defined in a dictionary or contextually, and should not be interpreted as an excessively reduced meaning.

In addition, singular expressions used in the present invention include plurals expressions unless they have definitely opposite meanings. In the present invention, it should not analyzed that a term such as "comprising" or "including" particularly includes various components or various steps disclosed in the specification and some component or some steps among them may not be included or additional components or steps may be further included.

In addition, terms including ordinal numbers, such as 'first' and 'second', used in the present invention can be used to describe various components, but the components should not be limited by the terms. The above terms are used only to discriminate one component from the other components. For example, a first component may be named a second component and similarly, the second component may also be named the first component, without departing from the scope of the present invention.

Hereinafter, preferable exemplary embodiment of the present invention will be described in more detail with reference to the accompanying drawings. Like reference numerals refer to like elements for easy overall understanding and a duplicated description of like elements will be omitted.

Further, in the following description, a detailed explanation of known related technologies may be omitted to avoid unnecessarily obscuring the subject matter of the present invention. Further, it is noted that the accompanying drawings are only for easily understanding the spirit of the present invention and it should not be interpreted that the spirit of the present invention is limited by the accompanying drawings.

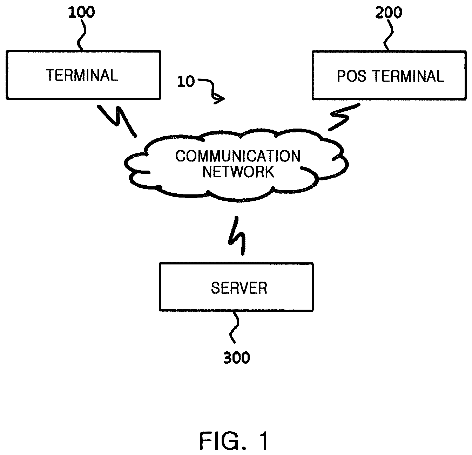

FIG. 1 is a block diagram illustrating a configuration of a product selling system 10 according to an embodiment of the present invention.

As illustrated in FIG. 1, the product selling system 10 includes a terminal 100, a POS terminal 200, and a server 300. All the constituent elements of the product selling system 10 illustrated in FIG. 1 are not essential constituent elements, and the product selling system 10 may be implemented by more constituent elements than the constituent elements illustrated in FIG. 1 or less constituent elements therethan.

The terminal 100 displays promotion product information provided from the server 300 to allow a user of the terminal 100 to recognize the promotion product and then transmits promotion product confirmation information to the server 300. Next, when the terminal 100 and the POS terminal 200 interwork with each other to perform a purchasing process on the promotion product, the POS terminal 200 transmits customer information and purchase information to the server 300. Thereafter, the server 300 checks whether customer information transmitted from the POS terminal 200 is included in a plurality of promotion product confirmation information. As a checking result, when the customer information transmitted from the POS terminal 200 is included in the plurality of promotion product confirmation information, the server 300 provides product purchase reward information including an accumulated point amount, a discounted amount, or a store discount coupon amount through an access route in the promotion product confirmation information corresponding to customer information to the terminal 100, as a push message.

Further, the terminal 100 displays the promotion product information provided from the server 300 to allow the user of the terminal 100 to recognize the promotion product and then transmits promotion product confirmation information to the server 300. Next, when the terminal 100 and the POS terminal 200 interwork with each other to perform a purchasing process on the promotion product, the POS terminal 200 outputs a receipt including guidance information, a random number or a universal code, and payment information and provides the receipt to the terminal 100. Thereafter, the terminal 100 transmits the random number or universal code included in the receipt and the customer information to the server 300 through an application. Thereafter, the server 300 checks whether customer information transmitted from the POS terminal 200 is included in the plurality of promotion product confirmation information. As a checking result, when the customer information transmitted from the POS terminal 200 is included in the plurality of promotion product confirmation information, the server 300 provides product purchase reward information including an accumulated point amount, a discounted amount, or a store discount coupon amount through an access route in the promotion product confirmation information corresponding to customer information to the terminal 100, as a push message.

Further, when the terminal 100 and the POS terminal 200 interwork with each other to perform a purchasing process on the promotion product, the POS terminal 200 transmits customer information and purchase information to the server 300. Next, the server 300 transmits reward guidance information for providing a reward according to the promotion product purchase to the terminal 100 based on the customer information, as a push message. Next, the terminal 100 receives and displays the reward guidance information and executes an application to be provided with the reward according to the promotion product purchase or interworks with the server 300 to install the application in the terminal 100. Thereafter, the terminal 100 receives the promotion product information provided from the server 300 and transmits promotion product response information to the server 300 in response to the received promotion product information. Next, the server 300 provides the product purchase reward information including the accumulated point amount or discounted amount or store discount coupon amount through the access route in the promotion product response information based on the promotion product response information transmitted from the terminal 100 to the terminal 100 as a push message.

Further, when the terminal 100 and the POS terminal 200 interwork with each other to perform a purchasing process on the promotion product, the POS terminal 200 outputs a receipt including guidance information, a random number or a universal code, and payment information and provides the receipt to the terminal 100. Thereafter, the terminal 100 transmits the random number (or universal code) included in the receipt and the customer information to the server 300 through an application. Next, the server 300 transmits reward guidance information for providing a reward according to the promotion product purchase to the terminal 100 based on the customer information, as a push message. Next, the terminal 100 receives and displays the reward guidance information and executes an application which is installed in advance to be provided with the reward according to the promotion product purchase or interworks with the server 300 to install the application in the terminal 100. Thereafter, the terminal 100 receives the promotion product information provided from the server 300 and transmits promotion product response information to the server 300 in response to the received promotion product information. Next, the server 300 provides the product purchase reward information including the accumulated point amount or discounted amount or store discount coupon amount through the access route in the promotion product response information based on the promotion product response information transmitted from the terminal 100 to the terminal 100 as a push message.

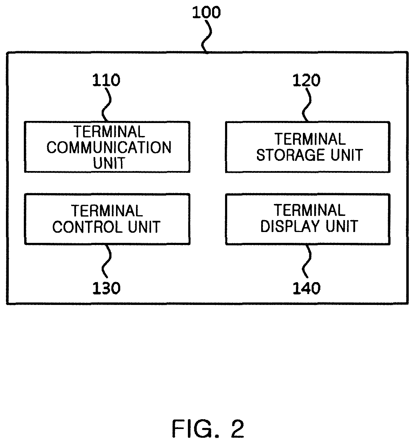

As illustrated in FIG. 2, the terminal 100 is constituted by a terminal communication unit 110, a terminal storage unit 120, a terminal control unit 130, and a terminal display unit 140. However, all the constituent elements of the terminal 100 illustrated in FIG. 2 are not essential constituent elements, and the terminal 100 may be implemented by more constituent elements than the constituent elements illustrated in FIG. 2 or less constituent elements therethan.

The terminal (or a user side device) 100 may be applied to various terminals such as a smart phone, a portable terminal, a mobile terminal, a personal digital assistant (PDA), a portable multimedia player (PMP) terminal, a telematics terminal, a navigation terminal, a personal computer, a notebook computer, a slate PC, a tablet PC, an ultrabook, a wearable device (for example, including a smart watch, a smart glass, or a head mounted display (HMD)), a Wibro terminal, an internet protocol television (IPTV) terminal, a smart TV, a digital broadcasting terminal, a television, a 3D television, a home theater system, an audio video navigation (AVN) terminal, an audio/video (A/V) system, and a flexible terminal.

The terminal communication unit 110 communicates with any internal constituent element or at least one arbitrary external terminal via a wired/wireless communication network. In this case, the arbitrary external terminal may include the POS terminal 200 and the server 300. Here, a wireless internet technique includes wireless LAN (WLAN), digital living network alliance (DLNA), wireless broadband (Wibro), world interoperability for microwave access (Wimax), high speed downlink packet access (HSDPA), high speed uplink packet access (HSUPA), IEEE 802.16, long term evolution (LTE), long term evolution-advanced (LTE-A), wireless mobile broadband service (WMBS). The terminal communication unit 110 transmits and receives data in accordance with at least one wireless Internet technique within a range including also Internet techniques which are not listed above. Further, the short range communication technique may include Bluetooth, radio frequency identification (RFID), infrared data association (IrDA), ultra wideband (UWB), ZigBee, near field communication (NFC), ultra sound communication (USC), visible light communication (VLC), Wi-Fi, Wi-Fi direct, or the like. Furthermore, the wired communication technique may include power line communication (PLC), USB communication, Ethernet, serial communication, an optical/coaxial cable, or the like.

Further, the terminal communication unit 110 may transmit information with any terminal through a universal serial bus (USB).

Further, the terminal communication unit 110 forms (or constitutes) access (or connection/session) to the POS terminal 200, the server 300, and the like by the control of the terminal control unit 130.

The terminal storage unit 120 stores various user interfaces UI and graphic user interfaces GUI.

Further, the terminal storage unit 120 stores data and programs which are required to operate the terminal 100.

That is, the terminal storage unit 120 may store a plurality of application programs (or applications) which are driven in the terminal 100 and data and commands for the operation of the terminal 100. At least some of the application programs may be downloaded from an external server through wireless communication. In the meantime, the application program is stored in the terminal storage unit 120 and installed in the terminal 100 to be driven to perform an operation (or a function) of the terminal 100 by the terminal control unit 130.

Further, the terminal storage unit 120 may include at least one storage medium of a flash memory type, a hard disk type, a multimedia card micro type, a card type memory (for example, an SD, XD memory, or the like), a magnetic memory, a magnetic disk, an optical disk, a random access memory (RAM), a static random access memory (SRAM), a read-only memory (ROM), an electrically erasable programmable read-only memory (EEPROM), and a programmable read-only memory (PROM). Further, the terminal 100 may operate a web storage which performs a storing function of the terminal storage unit 120 on the Internet or operate in association with the web storage.

Further, the terminal storage unit 120 stores customer information by the control of the terminal control unit 130. Here, the customer information includes a name, a phone number, a point card number, and identification information of the terminal 100. In this case, the identification information of the terminal 100 includes a mobile directory number (MDN), a mobile IP, a mobile MAC, a subscriber identify module (Sim) card unique information, and a serial number.

The terminal control unit 130 performs an overall control function of the terminal 100.

Further, the terminal control unit 130 performs an overall control function of the terminal 100 using a program and data stored in the terminal storage unit 120. The terminal control unit 130 may include a RAM, a ROM, a CPU, a GPU, and a bus and the RAM, the ROM, the CPU, the GPU, and the like are connected to each other through the bus. The CPU accesses the terminal storage unit 120 to perform booting using an O/S stored in the terminal storage unit 120 and performs various operations using various programs, contents, and data stored in the terminal storage unit 120.

Further, when the application which is installed in advance in the terminal 100 is executed, the terminal control unit 130 controls to receive promotion product information transmitted from the server 300 which interworks with the application through the terminal communication unit 110. Here, the promotion product information may be provided as a catalog and includes a manufacturer name, a promotion product name, a promotion product ID, a promotion product image, a store, a point providing company, an accumulated point amount, a discounted amount, a validation date, and a usage period.

Further, the terminal control unit 130 displays the received promotion product information on the terminal display unit 140 through the application.

Further, after checking the promotion product information displayed on the terminal display unit 140, when a predetermined confirmation menu (or a confirmation button) which is displayed on the terminal display unit 140 is selected, the terminal control unit 130 transmits the promotion product confirmation information to the server 300 through the terminal communication unit 110. Here, the promotion product confirmation information includes a customer ID, a promotion product ID, an access route, an access location (or location information), and access time. In this case, the access location (or the location information) may be confirmed through a beacon or an access point which is close to the terminal 100 and may be confirmed through a GPS receiver (not illustrated) equipped in the terminal 100.

Further, when a user of the terminal 100 carries a receipt including the guidance information related to the promotion product, the random number (or the universal code), and the payment information, the terminal control unit 130 receives a random number (or random number information related to the corresponding promotion product) (or a universal code) related to the corresponding promotion product corresponding to a user input.

Further, the terminal control unit 130 transmits (or provides) the random number (or the universal code) included in the receipt and the customer information to the server 300 by means of the terminal communication unit 110, through the predetermined application. Here, the customer information includes a name, a phone number, a point card number, and identification information of the terminal 100.

In the embodiment of the present invention, it is mainly described that the guidance information related to the promotion product, the random number (or universal code), and the payment information are included in the receipt, but it is not limited thereto. Instead of the random number related to the promotion product (or the random number information related to the promotion product), a barcode or a QR code related to the promotion product may be output (or printed) on the receipt together with the guidance information and the payment information.

As described above, when the barcode or the QR code is output on the receipt instead of the random number, the terminal 100 recognizes the barcode or the QR code output on the receipt through an application program (for example, including a barcode recognizing application or a QR code recognizing application) which is installed in advance in the terminal and transmits the recognized information to the server 300 together with the customer information.

Further, the terminal control unit 130 receives first product purchase reward information including an accumulated point amount or a discounted amount or a store discount coupon amount which is transmitted from the server 300 as a push message, through the terminal communication unit 110.

Further, the terminal control unit 130 displays the received first product purchase reward information on the terminal display unit 140.

Further, the terminal control unit 130 receives the reward guidance information for providing a reward (or benefit) according to the promotion product purchase which is transmitted from the server 300 as a push message, through the terminal communication unit 110.

Further, the terminal control unit 130 displays the received reward guidance information on the terminal display unit 140.

Further, the terminal control unit 130 interworks with the server 300 to install the application in the terminal 100 based on the reward guidance information to receive the reward according to the promotion product purchase.

Further, when the application is already installed in the terminal 100, the terminal control unit 130 executes the application installed in the terminal 100.

Further, after completely installing the application in the terminal 100 or executing the application which is installed in advance in the terminal 100, the terminal control unit 130 receives the promotion product information provided from the server 300 through the terminal communication unit 110. Here, the promotion product information may be provided as a catalog and includes a manufacturer name, a promotion product name, a promotion product ID, a promotion product image, a store, a point providing company, an accumulated point amount, a discounted amount, a validation date, and a usage period.

Further, the terminal control unit 130 displays the received promotion product information on the terminal display unit 140 through the application.

Further, the terminal control unit 130 transmits the promotion product response information to the server 300 through the terminal communication unit 110 in response to the received promotion product information. Here, the promotion product response information includes a customer ID, a promotion product ID, an access route, an access location, and access time.

Further, the terminal control unit 130 receives second product purchase reward information including an accumulated point amount or a discounted amount or a store discount coupon amount which is transmitted from the server 300 in response to the transmitted promotion product response information, through the terminal communication unit 110. Further, the terminal control unit 130 displays the received second product purchase reward information on the terminal display unit 140. In this case, there may be a difference of accumulated points or amounts (or discounted) between the first product purchase reward information and the second product purchase reward information including information related to the reward by the server 300. That is, when the promotion product is recognized before purchase or after purchase, the first product purchase reward information when the promotion product is recognized before purchase may include more reward information than the second product purchase reward information when the promotion product is recognized after purchase.

The terminal display unit 140 may display various contents such as various menu screens using a user interface and/or graphic user interface stored in the terminal storage unit 120, by the control of the terminal control unit 130. Here, the contents displayed on the terminal display unit 140 may include a menu screen including various texts, image data (including various information data), and data such as icons, list menus, or a combo boxes. Further, the terminal display unit 140 may be a touch screen. In this case, a touch sensor which detects a touch gesture of the user may be included. The touch sensor may be any one of various types such as a capacitive type, a decompressive type, or a piezoelectric type. In the case of the capacitive type, when a part of a user's body touches a surface of the touch screen by using a dielectric coated on the surface of the touch screen, a touch coordinate is calculated by sensing minute electricity excited to the user's body. In the case of the decompressive type, two electrode plates are embedded in the touch screen, and when the user touches the screen, upper and lower electrode plates contact each other at the touched position and then current flows, and the touch coordinate is calculated by sensing the flow of the current. In addition to this, the user device supports a pen input function. In this case, a gesture of the user utilizing an input unit such as a pen, rather than the part of the body of the user, may be sensed. For example, when the input unit is a stylus pen in which a coil is included, the user device may include a magnetic field sensor for sensing a magnetic field changed by the coil in the stylus pen. In this case, an approaching gesture of the user such as hovering in addition to the touch gesture of the user may be sensed.

Further, the terminal display unit 140 may be implemented by at least one of a liquid crystal display (LCD), a thin film transistor liquid crystal display (TFT LCD), an organic light emitting diode (OLED), a flexible display, a three dimensional display (3D display), an electronic ink (e-ink) display, and a light emitting diode (LED) and also include a driving circuit therefor and a back light unit together.

Further, the terminal display unit 140 may be constituted as a stereoscopic display unit which displays a stereoscopic image.

A 3D display type such as a stereoscopic type (a glasses type), an auto-stereoscopic type (a glassless type), and a projection type (a holographic type) may be applied to the stereoscopic display unit.

Further, the terminal display unit 140 displays the promotion product information, the promotion product confirmation information, the random number related to the promotion product (or the random number information related to the promotion product) (or a universal code), the customer information, the product purchase reward information, the reward guidance information for receiving the reward according to the promotion product purchase, and the promotion product response information, by the control of the terminal control unit 130.

The terminal 100 may further include a voice output unit (not illustrates) which outputs voice information included in a signal signal-processed by the terminal control unit 130. Here, the voice output unit may include a receiver, a speaker, a buzzer, and the like.

Further, the voice output unit outputs a guidance voice generated by the terminal control unit 130.

Further, the voice output unit outputs voice information corresponding to the promotion product information, the promotion product confirmation information, the random number related to the promotion product (or the random number information related to the promotion product) (or a universal code), the customer information, the product purchase reward information, the reward guidance information for receiving the reward according to the promotion product purchase, the promotion product response information, and the like by the control of the terminal control unit 130.

Further, the terminal 100 may further include an interface unit (not illustrated) serving as an interface with all external apparatuses which are connected to the terminal 100. For example, the interface unit may be constituted by a wired/wireless headset port, an external charger port, a wired/wireless data port, a memory card port, a port connecting devices with identification modules, an audio input/output (I/O) port, a video input/output (I/O) port, an earphone port, and the like. Here, the identification module is a chip which stores various information for authenticating a permission of the terminal 100 and may include a user identity module (UIM), a subscriber identity module (SIM), a universal subscriber identity module (USIM), and the like. Further, the device provided with the identification module may be prepared in a smart card form. Accordingly, the identification module may be connected with the terminal 100 through the port. Such an interface unit receives data or power from an external device to transmit the received data or power to each constituent element in the terminal 100 or transmit the data in the terminal 100 to the external device.

Further, the interface unit may be a passage through which the power from a cradle is supplied to the corresponding terminal 100 when the terminal 100 is connected to an external cradle or a passage through which various command signals input from the cradle by the user is transferred to the corresponding terminal 100. Various command signals input from the cradle or the corresponding power may also operate by a signal for recognizing that the terminal 100 is accurately installed on the cradle.

Further, the terminal 100 may further include an input unit (not illustrated) for receiving a signal according to a button operation of the user or any function selection or receiving a command or a control signal created by an operation such as an operation of touching/scrolling the displayed screen.

The input unit as a means for receiving at least one of a user's command, selection, data, and information may include a plurality of input keys and function keys for receiving figure or text information and setting various functions.

Further, the input unit may use various devices such as a key pad, a dome switch, a touch pad (a pressure resistive type/a contact capacitive type), a touch screen, a jog wheel, a jog switch, a jog shuttle, a mouse, a stylus pen, and a touch pen. Particularly, when the terminal display unit 140 is formed in a touch screen form, some or all of the input functions may be performed by the terminal display unit 140.

As described above, the terminal 100 provides the promotion product confirmation information according to the promotion product recognition through a prior recognizing process on the promotion product which is registered in the server 300 by the advertiser to the server 300. Thereafter, when the promotion product is purchased in an on/off store, the reward (or point accumulation/discount coupon function) may be conveniently provided through the promotion product confirmation information provided in the server 300.

The POS (point of sales) terminal 200 communicates with the terminal 100, the server 300, and the like.

Further, the POS terminal 200 includes a Bluetooth module. Here, the POS terminal 200 is provided in a predetermined location (or store).

Further, the POS terminal 200 receives the store information corresponding to the provided location, coupon information, one or more payment related cards which are available in the store (or payment related card information/payment means information), and the promotion product information from the service providing device 130 in real time and maintains latest information status based on the received information.

Further, the POS terminal 200 communicates with a terminal 100 which is close to an area where the POS terminal 200 equipped with the Bluetooth module through Bluetooth pairing and transmits (or provides) the store information, the coupon information, and one or more payment related cards which are available in the store which are stored in the POS terminal 200 equipped with the Bluetooth module to the connected terminal 100.

Further, when the terminal 100 and the POS terminal 200 interwork with each other to perform a purchasing process on the promotion product, the POS terminal 200 confirms (or receives) customer information of the terminal 100. Here, the customer information includes a name, a phone number, a point card number, and identification information of the terminal 100. Here, the identification information of the terminal 100 includes an MDN, a mobile IP, a mobile MAC, a subscriber identify module (Sim) card unique information, and a serial number of the terminal 100.

Further, the POS terminal 200 transmits the customer information and purchase information to the server 300. Here, the purchase information includes the store, the promotion product ID, a receipt unique number, a purchasing time, and a customer ID.

Further, when the terminal 100 and the POS terminal 200 interwork with each other to perform a purchasing process on the promotion product, the POS terminal 200 outputs a receipt including guidance information, a random number or a universal code, and payment information. Further, the user (for example, a clerk in the store) of the POS terminal 200 provides the output receipt to the user of the terminal 100. Here, the guidance information includes information on a point accumulating method, information in point discount, information on a store discount coupon, information on an application downloading method related to the store, information on application benefit related to the store, information on an application downloading method of another company, and information on application benefit of another company.

Further, after transmitting the customer information and the purchase information from the POS terminal 200 to the server 300, when the purchase of the promotion product is completed, the POS terminal 120 performs the payment function based on the received information on the payment related card.

Further, the POS terminal 200 outputs a receipt including a payment function performing result. Here, the product purchase reward information according to the promotion product purchase may be included or may not be included in the receipt.

In the embodiment of the present invention, it is described that the payment function is performed by a payment related card which is registered in advance in the terminal 100, but it is not limited thereto. The payment function may be performed by a coupon or a gift certificate which is registered in advance in the terminal 100.

That is, the payment related card, the coupon, and the gift certificate which are available in the store are transmitted from the POS terminal 200 equipped with the Bluetooth module to the terminal 100. Thereafter, the terminal 100 checks whether the payment related card, the coupon, and the gift certificate which are transmitted from the POS terminal 200 equipped with the Bluetooth module and are available in the store are included in the plurality of payment related cards, coupons, and gift certificates which are registered in advance in the terminal 100, and the payment function may be performed through the POS terminal 200 equipped with the Bluetooth module by a checked payment related card, a coupon, or a gift certificate selected from the checked payment related cards, coupons, and gift certificates.

Further, the POS terminal 200 transmits payment information (for example, including a payment amount) of the payment related card by which the payment is performed, the store information of the store where the POS terminal 200 is located, and the identification information of the terminal 100 to the server 300. Here, the store information of the store where the POS terminal 200 is located may be replaced by any one of identification information of the POS terminal 200, unique information of the POS terminal 200, unique identification information of the store where the POS terminal 200 is located, and information on the Bluetooth module equipped in the POS terminal 200. In this case, the information on the Bluetooth module includes a model name and a unique code (or identification information) of the Bluetooth module.

As described above, the POS terminal 200 interworks with the terminal 100 and the server 300 to perform a payment function on one or more products (for example, including a promotion product and a non-promotion product) which are to be purchased by the terminal 100.

Further, when the promotion product is included in the product to be paid, the POS terminal 200 provides customer information related to the user of the terminal 100 which purchases the promotion product and the purchase information on the promotion product to the server 300 to allow the terminal to be provided with a reward function according to the promotion product purchase.

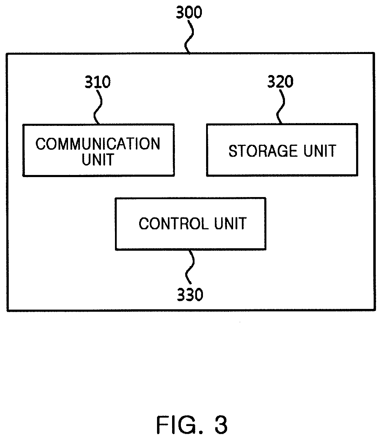

As illustrated in FIG. 3, the server 300 is constituted by a communication unit 310, a storage unit 320, and a control unit 330. However, all the constituent elements of the server 300 illustrated in FIG. 3 are not essential constituent elements, and the server 300 may be implemented by more constituent elements than the constituent elements illustrated in FIG. 3 or less constituent elements therethan.

Further, the server 300 may be implemented in a form such as a web server, a database server, and a proxy server. Further, in the service providing device 300, one or more of various software which allows a network load distribution mechanism or a cloud streaming server to operate on the Internet or other networks may be installed, and as a result, the service providing device 300 may be implemented by a computerized system. Further, the network may be an http network and may be a private line, Intranet, or any other networks. Furthermore, the server 300, the terminal 100, or the POS terminal 200 may be connected to each other by a security network so as to suppress the data from being attacked by any hacker or other third parties. Further, the server 300 may include a plurality of database servers. The database server may be implemented to be separately connected with the server 300 through any type of network connection including a distributed database server architecture.

A processor mounted in the terminal100, the POS terminal 200, or the server 300 according to the exemplary embodiment of the present invention may process the program command to execute the method according to the exemplary embodiment of the present invention. In an implemented embodiment, the processor may be a single-threaded processor. In another implemented embodiment, the processor may be a multi-threaded processor. Further, the processor may process the command stored on the memory or the storage device.

The communication unit 310 communicates with any internal constituent element or at least one external terminal via a wired/wireless communication network. In this case, the arbitrary external terminal may include the terminal 100 and the POS terminal 200. Here, a wireless internet technique includes wireless LAN (WLAN), digital living network alliance (DLNA), wireless broadband (Wibro), world interoperability for microwave access (Wimax), high speed downlink packet access (HSDPA), high speed uplink packet access (HSUPA), IEEE 802.16, long term evolution (LTE), long term evolution-advanced (LTE-A), wireless mobile broadband service (WMBS). The communication unit 310 transmits and receives data in accordance with at least one wireless Internet technique within a range including Internet techniques which are not listed above. Further, the short range communication technique may include Bluetooth, radio frequency identification (RFID), infrared data association (IrDA), ultra wideband (UWB), ZigBee, near field communication (NFC), ultra sound communication (USC), visible light communication (VLC), Wi-Fi, Wi-Fi direct, or the like. Further, the wired communication technique may include power line communication (PLC), USB communication, Ethernet, serial communication, optical/coaxial cable, or the like.

The communication unit 310 may transmit information with any terminal through a universal serial bus (USB).

Further, the communication unit 310 forms (or constitutes) access (or connection/session) to the terminal 100, the POS terminal 200, and the like by the control of the control unit 330.

The storage unit 320 stores various user interfaces UI and graphic user interfaces GUI.

Further, the storage unit 320 stores data and programs required to operate the server 300.

That is, the storage unit 320 may store a plurality of application programs which are driven in the server 300 and data and commands for operation of the server 300. At least some of the application programs may be downloaded from an external server through wireless communication. In the meantime, the application program is stored in the storage unit 320 and installed on the server 300 to be driven to perform an operation (or a function) of the server 300 by the control unit 330.

Further, the storage unit 320 may include at least one storage medium of a flash memory type, a hard disk type, a multimedia card micro type, a card type memory (for example, an SD or XD memory), a magnetic memory, a magnetic disk, an optical disk, a random access memory (RAM), a static random access memory (SRAM), a read-only memory (ROM), an electrically erasable programmable read-only memory (EEPROM), and a programmable read-only memory (PROM). Further, the server 300 may operate a web storage which performs a storing function of the storage unit 320 on the Internet or operate in association with the web storage.

Further, the storage unit 320 stores the promotion product information provided from an advertiser terminal (not illustrated) by the control of the control unit 330. Here, the promotion product information may be provided as a catalog and includes a manufacturer name, a promotion product name, a promotion product ID, a promotion product image, a store, a point providing company, an accumulated point amount, a discounted amount, a validation date, and a usage period.

The control unit 330 performs an overall control function of the server 300.

The control unit 330 performs an overall control function of the server 300 using a program and data stored in the storage unit 320. The control unit 330 may include a RAM, a ROM, a CPU, a GPU, and a bus, and the RAM, the ROM, the CPU, the GPU, and the like may be connected to each other through the bus. The CPU accesses the storage unit 320 to perform booting using an O/S stored in the storage unit 320 and performs various operations using various programs, contents, and data stored in the storage unit 320.

When the application which is installed in advance in the terminal 100 is executed, the control unit 330 transmits the promotion product confirmation information stored in the storage unit 320 to the terminal 100 through the communication unit 310.

Further, the control unit 330 receives the promotion product confirmation information transmitted from the terminal 100 through the communication unit 310 in response to the transmitted promotion product information. Here, the promotion product confirmation information includes a customer ID, a promotion product ID, an access route, an access location (or location information), and access time.

Further, the control unit 330 stores the received promotion product confirmation information in the storage unit 320.

Further, when the terminal 100 and the POS terminal 200 interwork with each other to perform a payment function on the promotion product, the control unit 330 receives the customer information and the purchase information transmitted from the POS terminal 200 through the communication unit 310.

Further, the control unit 330 checks (or determines) whether a user related to the customer information checks the promotion product in advance by a user related to the customer information, based on the received customer information.

That is, the control unit 330 checks whether customer information transmitted from the POS terminal 200 is included in the plurality of promotion product confirmation information which is stored in advance in the storage unit 320.

Further, as a checking result (or a determination result), when the customer information is included in the plurality of promotion product confirmation information, the control unit 330 performs a reward function on the ID corresponding to the customer information. Further, the control unit 330 transmits the product purchase reward information including the accumulated point amount, the discounted amount, or the store discount coupon amount through the access route included in the promotion product confirmation information corresponding to the customer information to the terminal 100 as a push message, through the communication unit 310.

In this case, the control unit 330 provides (or pays) the discount coupon which is available in the store (or shop/franchise shop related to the store/ store) where the promotion product is sold, to the terminal 100 through the communication unit 310 to induce the user of the terminal 100 to revisit the store.

Further, as the checking result, when the customer information is not included in the plurality of promotion product confirmation information, the control unit 330 transmits the reward guidance information for providing a reward (or benefit) according to the promotion product purchase to the terminal 100 through the communication unit 310 as a push message, based on the customer information.

Further, after executing the application which is set in advance in the terminal 100 and newly installing the application, based on the reward guidance information transmitted to the terminal 100, the control unit 330 transmits the promotion product information to the terminal 100 through the communication unit 310.

Further, the control unit 330 receives the promotion product response information transmitted from the terminal 100 through the communication unit 310 in response to the transmitted promotion product information. Here, the promotion product response information includes a customer ID, a promotion product ID, an access route, an access location, and access time.

Further, the control unit 330 transmits the second product purchase reward information including the accumulated point amount, the discounted amount, or the store discount coupon amount through the access route included in the promotion product response information to the terminal 100 as a push message based on the received promotion product response information.

As described above, when the user of the terminal 100 previously purchases the promotion product, instead of providing the reward without confirming whether the user recognizes the promotion product, the server 300 provides a reward after reflecting the intension of the advertiser terminal such that the user recognizes the purchased product as the promotion product again and then receives the reward even after purchasing the promotion product in advance without recognizing the promotion product, thereby maximizing the advertising effect.

Further, as described above, when it is confirmed that the promotion product is actually purchased, if a customer who purchases the promotion product is discerned, the POS terminal 200 provides the checked customer information to the server 300. In contrast, if the customer who purchases the promotion product is unknown, the customer information of the terminal 100 is provided to the server 300 together with the random number when the random number (or the universal code) is provided to the server 300 through the terminal 100 to confirm whether to purchase the promotion product.

Further, as described above, the server 300 provides the promotion product information on the promotion product which is registered by the advertiser terminal to one or more terminals 100 so as to previously recognize (or perceive) the promotion product and stores the promotion product confirmation information transmitted from the at least one terminal 100 in response to the provided promotion product information. Thereafter, when the customer information related to the user of the terminal 100 who purchases the promotion product or the purchase information on the promotion product is received from the POS terminal 200 by the purchasing procedure on the promotion product or the random number included in the receipt and the customer information are received from the terminal 100, the server 300 compares the previously stored promotion product confirmation information and the received customer information to provide a reward function related to the promotion product to the terminal 100 by the comparison result and provides a reward function providing result (or the product purchase reward information) to the terminal 100 so that the user (or customer) of the terminal 100 may perceive the promotion product provided by the advertiser before purchasing the promotion product or after purchasing the promotion product, thereby confirming the advertising effect.

Therefore, a reward function may be provided based on the promotion product information purchased by the terminal when a purchase intension on the promotion product is recognized in advance through a prior walk-in process or even when the promotion product is recognized without having a walk-in process

Hereinbelow, a control method of a product selling system including a server according to an embodiment of the present invention will be described in detail with reference to FIGS. 1 to 8.

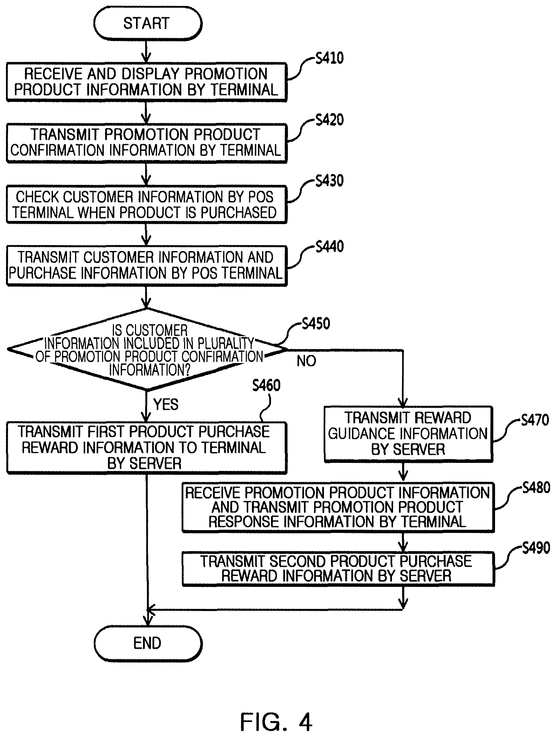

FIG. 4 is a flowchart illustrating a control method of a product selling system including a server according to a first exemplary embodiment of the present invention.

First, when an application which is installed in advance in the terminal 100 is executed, a terminal 100 receives promotion product information transmitted from a server 300 which interworks with the application. Here, the promotion product information may be provided as a catalog and includes a manufacturer name, a promotion product name, a promotion product ID, a promotion product image, a store, a point providing company, an accumulated point amount, a discounted amount, a validation date, and a usage period.

Further, the terminal 100 displays the received promotion product information through the application.

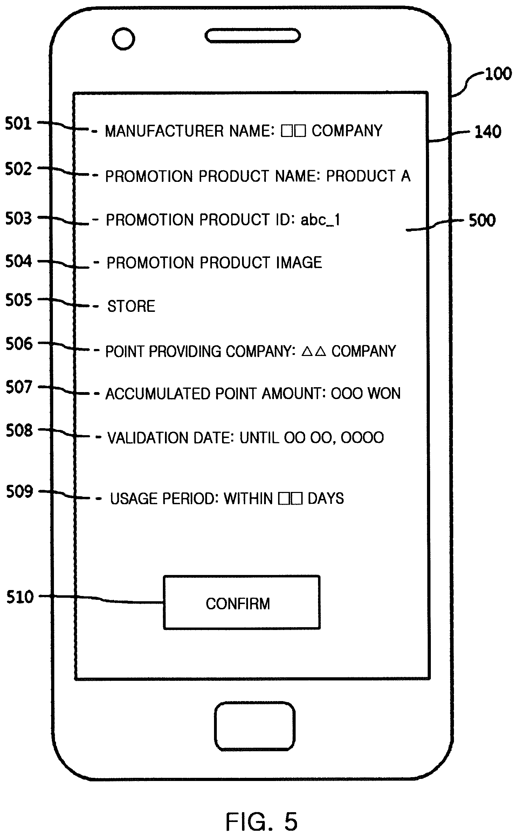

As an example, when the application which is installed in advance in the terminal 100 is executed, as illustrated in FIG. 5, the terminal 100 displays promotion product information 500 including a manufacturer name (for example, a B company) 501, a promotion product name (for example, product A) 502, a promotion product ID (for example, abc_1) 503, a promotion product image 504, a store 505, a point providing company (for example, a C company) 506, an accumulated point amount (for example, 100 won) 507, a validation date (for example, until October 10, 2015) 508, and a usage period (for example, available within 30 days) 509 which are provided from the server 300 (S410).

Next, when the predetermined confirmation menu (or a confirmation button) is selected after checking the promotion product information displayed on the terminal 100, the terminal 100 transmits promotion product confirmation information to the server 300. Here, the promotion product confirmation information includes a customer ID, a promotion product ID, an access route, an access location (or location information), and access time.

For example, when a confirmation menu 510 in the promotion product information 500 illustrated in FIG. 5 is selected, the terminal 100 generates the promotion product confirmation information including a customer ID, a promotion product ID, an access route (a dedicated application or Internet), an access location, and access time and transmits the generated promotion product confirmation information to the server (S420).

Next, when the terminal 100 and the POS terminal 200 interwork with each other to perform a purchasing process on the promotion product, the POS terminal 200 confirms (or receives) customer information of the terminal 100. Here, the customer information includes a name, a phone number, a point card number, and identification information of the terminal 100.

For example, when the user of the terminal 100 visits a store equipped with a promotion product A to purchase the promotion product A, the POS terminal 200 checks customer information of the terminal 100 including a name, a phone number, a point card number, and identification information of the terminal 100 (S430).

Next, the POS terminal 200 transmits the customer information and purchase information to the server 300. Here, the purchase information includes the store, the promotion product ID, a receipt unique number, a purchasing time, and a customer ID.

Further, after transmitting the customer information and the purchase information from the POS terminal 200 to the server 300, when the purchase of the promotion product is completed, the POS terminal 200 outputs a receipt. Here, the product purchase reward information according to the promotion product purchase may be included or may not be included in the receipt.

For example, the POS terminal 200 transmits the customer information and the purchase information to the server 300 (S440).

Next, the server 300 receives the customer information and the purchase information transmitted from the POS terminal 200.

Further, the server 300 checks (or determines) whether a user related to the customer information checks the promotion product in advance by a user related to the customer information, based on the received customer information.

That is, the server 300 checks whether the customer information is included in the plurality of promotion product confirmation information which is stored in advance.

For example, the server 300 checks whether the customer information is included in the plurality of promotion product confirmation information related to the promotion product A which is stored in advance (S450).

Next, as a checking result (or a determination result), when the customer information is included in the plurality of promotion product confirmation information, the server 300 provides first product purchase reward information including an accumulated point amount, a discounted amount, or a store discount coupon amount through an access route included in the promotion product confirmation information corresponding to the customer information to the terminal 100, as a push message. In this case, when the customer information is checked, the server 300 additionally provides information on an application downloading method related to the store, application benefit information related to the store, information on an application downloading method of another company, and application benefit information of another company to the terminal 300 and induces the terminal 100 to install the application.

Further, the terminal 100 receives the first product purchase reward information transmitted from the server 300 and displays the received first product purchase reward information.

For example, when the customer information is included in the plurality of promotion product confirmation information related to the promotion product A, the server 300 transmits the first product purchase reward information including the point accumulation information through an access route (for example, a dedicated application) included in the promotion product confirmation information corresponding to the customer information to the terminal 100 as a push message. Further, the terminal 100 displays the first product purchase reward information through the application which is installed in advance in the terminal 100 (S460).

Further, as the checking result, when the customer information is not included in the plurality of promotion product confirmation information, the server 300 transmits reward guidance information for providing a reward (or benefit) according to promotion product purchase based on the customer information to the terminal 100 as a push message.

Further, the terminal 100 receives the reward guidance information transmitted from the server 300 and displays the received reward guidance information. Further, the terminal 100 installs the application in the terminal 100 or executes the application which is installed in advance in the terminal 100 by interworking with the server 300 to receive the reward according to the promotion product purchase based on the received reward guidance information.

For example, when the customer information is not included in the plurality of promotion product confirmation information related to the promotion product A, the server 300 transmits reward guidance information for providing a reward according to the purchase of the promotion product A to the terminal 100 corresponding to the customer information as a push message. Further, the terminal 100 installs the related application in the terminal 100 by interworking with the server 300 to receive the reward according to the promotion product purchase (S470) .

Next, after completely installing the application in the terminal 100 or executing the application which is installed in advance in the terminal 100, the terminal 100 receives the promotion product information provided from the server 300. Here, the promotion product information may be provided as a catalog and includes a manufacturer name, a promotion product name, a promotion product ID, a promotion product image, a store, a point providing company, an accumulated point amount, a discounted amount, a validation date, and a usage period.

Further, the terminal 100 displays the received promotion product information through the application.

Further, the terminal 100 transmits the promotion product response information to the server 300 in response to the received promotion product information. Here, the promotion product response information includes a customer ID, a promotion product ID, an access route, an access location, and access time.

For example, when the application is executed after completely installing the application in the terminal 100, the terminal 100 receives the promotion product information including a manufacturer name, a promotion product name (for example, a product A), a promotion product ID, a promotion product image, a store, a point providing company, an accumulated point amount, a discounted amount, a validation date, and a usage period which are provided from the server 300, generates promotion product response information including a customer ID, a promotion product ID, an access route (a dedicated application or Internet), an access location, and access time in response to the received promotion product information, and transmits the generated promotion product response information to the server 300 (S480).

Next, the server 300 receives the promotion product response information transmitted from the terminal 100 in response to the transmitted promotion product information.

Further, the server 300 transmits the second product purchase reward information including the accumulated point amount, the discounted amount, or the store discount coupon amount through the access route included in the promotion product response information to the terminal 100 as a push message based on the received promotion product response information.

Further, the terminal 100 receives the second product purchase reward information transmitted from the server 300 and displays the received second product purchase reward information. In this case, the server 300 may differentially apply an accumulated (or discounted) point or an amount between the first product purchase reward information and the second product purchase reward information. That is, when the promotion product is recognized before purchase or after purchase, the server 300 may provide more reward to the first product purchase reward information when the promotion product is recognized before purchase than that to the second product purchase reward information when the promotion product is recognized after purchase.

For example, the server 300 transmits the second product purchase reward information including the point accumulation information to the terminal 100 through the access route (a dedicated application or an Internet) included in the received promotion product response information, as a push message. Further, the terminal 100 displays the second product purchase reward information through the application which is installed in advance in the terminal 100 (S490).

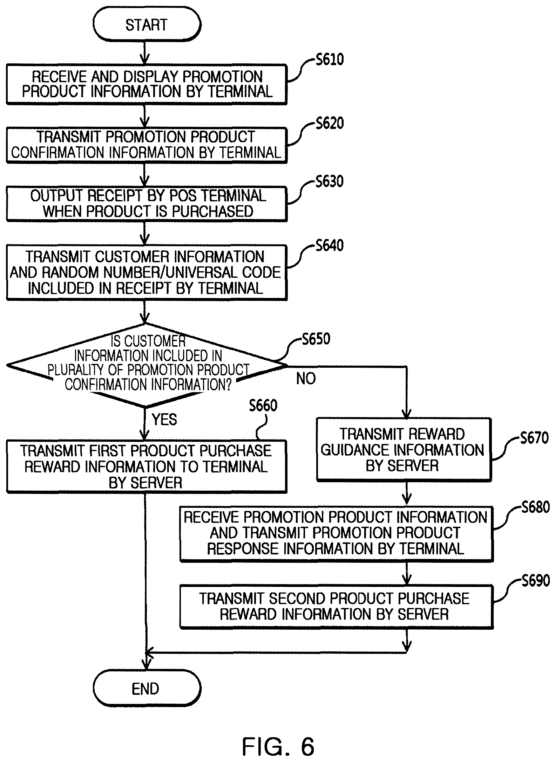

FIG. 6 is a flowchart illustrating a control method of a product selling system including a server according to a second exemplary embodiment of the present invention.

First, when an application which is installed in advance in the terminal 100 is executed, a terminal 100 receives promotion product information transmitted from a server 300 which interworks with the application. Here, the promotion product information may be provided as a catalog and includes a manufacturer name, a promotion product name, a promotion product ID, a promotion product image, a store, a point providing company, an accumulated point amount, a discounted amount, a validation date, and a usage period.

Further, the terminal 100 displays the received promotion product information through the application.

As an example, when the application which is installed in advance in the terminal 100 is executed, as illustrated in FIG. 5, the terminal 100 displays promotion product information 500 including a manufacturer name (for example, a B company) 501, a promotion product name (for example, product A) 502, a promotion product ID (for example, abc_1) 503, a promotion product image 504, a store 505, a point providing company (for example, a C company) 506, an accumulated point amount (for example, 100 won) 507, a validation date (for example, until October 10, 2015) 508, and a usage period (for example, available within 30 days) 509 which are provided from the server 300 (S610).

Next, when the predetermined confirmation menu (or a confirmation button) is selected after checking the promotion product information displayed on the terminal 100, the terminal 100 transmits promotion product confirmation information to the server 300. Here, the promotion product confirmation information includes a customer ID, a promotion product ID, an access route, an access location (or location information), and access time.

For example, when a confirmation menu 510 in the promotion product information 500 illustrated in FIG. 5 is selected, the terminal 100 generates the promotion product confirmation information including a customer ID, a promotion product ID, an access route (a dedicated application or Internet), an access location, and access time and transmits the generated promotion product confirmation information to the server (S620).

Further, when the terminal 100 and the POS terminal 200 interwork with each other to perform a purchasing process on the promotion product, the POS terminal 200 outputs a receipt including guidance information, a random number or a universal code, and payment information. Further, the user (for example, a clerk in the store) of the POS terminal 200 provides the output receipt to the user of the terminal 100. Here, the guidance information includes information on a point accumulating method, information in point discount, information on a store discount coupon, information on an application downloading method related to the store, information on application benefit related to the store, information on an application downloading method of another company, and information on application benefit of another company.

For example, when the user of the terminal 100 visits a store equipped with a promotion product A to purchase (or make a payment for) the promotion product A, the POS terminal 200 outputs a receipt including guidance information including information on a point accumulating method for the promotion product A, a random number or a universal code for accumulating a point for the promotion product A, and payment information for the promotion product A and provides the output receipt to the user of the terminal 100 (S630).

Next, the terminal 100 transmits (or provides) the random number or the universal code and the customer information included in the receipt to the server 300 through the application which is installed in advance in the terminal 100. Here, the customer information includes a name, a phone number, a point card number, and identification information of the terminal 100.

For example, the terminal 100 receives the random number or the universal code and the customer information included in the receipt through the application which is installed in the terminal 100 in accordance with user input of the terminal 100 who carries the receipt. Further, the terminal 100 transmits the random number and the customer information to the server 300 (S640).

Next, the server 300 receives the random number (or the universal code) and the customer information transmitted from the terminal 100.

Further, the server 300 checks (or determines) whether a user related to the customer information checks the promotion product in advance, based on the received customer information.

That is, the server 300 checks whether the customer information is included in the plurality of promotion product confirmation information which is stored in advance.

For example, the server 300 checks whether the customer information is included in the plurality of promotion product confirmation information related to the promotion product A which is stored in advance (S650).

Next, as a checking result (or a determination result), when the customer information is included in the plurality of promotion product confirmation information, the server 300 provides first product purchase reward information including an accumulated point amount, a discounted amount, or a store discount coupon amount through an access route included in the promotion product confirmation information corresponding to the customer information to the terminal 100, as a push message. In this case, when the customer information is checked, the server 300 additionally provides information on an application downloading method related to the store, application benefit information related to the store, information on an application downloading method of another company, and application benefit information of another company to the terminal 100 and induces the terminal 100 to install the application.

Further, the terminal 100 receives the first product purchase reward information transmitted from the server 300 and displays the received first product purchase reward information.

For example, when the customer information is included in the plurality of promotion product confirmation information related to the promotion product A, the server 300 transmits the first product purchase reward information including the point accumulation information through an access route (for example, a dedicated application) included in the promotion product confirmation information corresponding to the customer information to the terminal 100 as a push message. Further, the terminal 100 displays the first product purchase reward information through the application which is installed in advance in the terminal 100 (S660).

Further, as the checking result, when the customer information is not included in the plurality of promotion product confirmation information, the server 300 transmits reward guidance information for providing a reward (or benefit) according to promotion product purchase based on the customer information to the terminal 100 as a push message.

Further, the terminal 100 receives the reward guidance information transmitted from the server 300 and displays the received reward guidance information. Further, the terminal 100 installs the application in the terminal 100 or executes the application which is installed in advance in the terminal 100 by interworking with the server 300 to receive the reward according to the promotion product purchase based on the received reward guidance information.

For example, when the customer information is not included in the plurality of promotion product confirmation information related to the promotion product A, the server 300 transmits reward guidance information for providing a reward according to the purchase of the promotion product A to the terminal 100 corresponding to the customer information as a push message. Further, the terminal 100 installs the related application in the terminal 100 by interworking with the server 300 to receive the reward according to the promotion product purchase (S670) .

Next, after completely installing the application in the terminal 100 or executing the application which is installed in advance in the terminal 100, the terminal 100 receives the promotion product information provided from the server 300. Here, the promotion product information may be provided as a catalog and includes a manufacturer name, a promotion product name, a promotion product ID, a promotion product image, a store, a point providing company, an accumulated point amount, a discounted amount, a validation date, and a usage period.

Further, the terminal 100 displays the received promotion product information through the application.

Further, the terminal 100 transmits the promotion product response information to the server 300 in response to the received promotion product information. Here, the promotion product response information includes a customer ID, a promotion product ID, an access route, an access location, and access time.

For example, when the application is executed after completely installing the application in the terminal 100, the terminal 100 receives the promotion product information including a manufacturer name, a promotion product name (for example, a product A), a promotion product ID, a promotion product image, a store, a point providing company, an accumulated point amount, a discounted amount, a validation date, and a usage period which are provided from the server 300, generates promotion product response information including a customer ID, a promotion product ID, an access route (a dedicated application or Internet), an access location, and access time in response to the received promotion product information, and transmits the generated promotion product response information to the server 300 (S680).

Next, the server 300 receives the promotion product response information transmitted from the terminal 100 in response to the transmitted promotion product information.

Further, the server 300 transmits the second product purchase reward information including the accumulated point amount, the discounted amount, or the store discount coupon amount through the access route included in the promotion product response information to the terminal 100 as a push message based on the received promotion product response information.

Further, the terminal 100 receives the second product purchase reward information transmitted from the server 300 and displays the received second product purchase reward information. In this case, the server 300 may differentially apply an accumulated (or discounted) point or an amount between the first product purchase reward information and the second product purchase reward information. That is, when the promotion product is recognized before purchase or after purchase, the server 300 may provide more reward to the first product purchase reward information when the promotion product is recognized before purchase than that to the second product purchase reward information when the promotion product is recognized after purchase.

For example, the server 300 transmits the second product purchase reward information including the point accumulation information to the terminal 100 through the access route (a dedicated application or an Internet) included in the received promotion product response information, as a push message. Further, the terminal 100 displays the second product purchase reward information through the application which is installed in advance in the terminal 100 (S690).

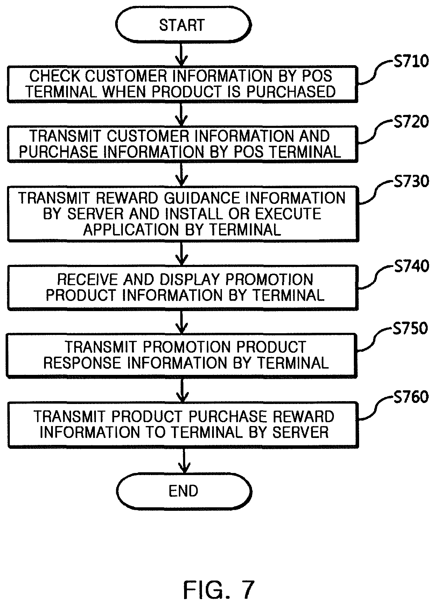

FIG. 7 is a flowchart illustrating a control method of a product selling system including a server according to a third exemplary embodiment of the present invention.

First, when the terminal 100 and the POS terminal 200 interwork with each other to perform a purchasing process on the promotion product, the POS terminal 200 confirms (or receives) customer information of the terminal 100. Here, the customer information includes a name, a phone number, a point card number, and identification information of the terminal 100.

For example, when the user of the terminal 100 visits a store equipped with a promotion product A to purchase the promotion product A, the POS terminal 200 checks customer information of the terminal 100 including a name, a phone number, a point card number, and identification information of the terminal 100 (S710).

Next, the POS terminal 200 transmits the customer information and purchase information to the server 300. Here, the purchase information includes the store, the promotion product ID, a receipt unique number, a purchasing time, and a customer ID.

Further, after transmitting the customer information and the purchase information from the POS terminal 200 to the server 300, when the purchase of the promotion product is completed, the POS terminal 200 outputs a receipt. Here, the product purchase reward information according to the promotion product purchase may be included or may not be included in the receipt.

For example, the POS terminal 200 transmits the customer information and the purchase information to the server 300 (S720).

Next, the server 300 receives the customer information and the purchase information transmitted from the POS terminal 200.

Further, the server 300 transmits reward guidance information for providing a reward (or a benefit) according to the promotion product purchase to the terminal 100 based on the customer information, as a push message.

Further, the terminal 100 receives the reward guidance information transmitted from the server 300 and displays the received reward guidance information. Further, the terminal 100 installs the application in the terminal or executes the application which is installed in advance in the terminal 100 by interworking with the server 300 to receive the reward according to the promotion product purchase based on the received reward guidance information.

For example, the server 300 transmits reward guidance information for providing a reward according to purchase of the promotion product A to the terminal 100 corresponding to the customer information, as a push message. Further, the terminal 100 installs the related application in the terminal 100 by interworking with the server 300 to receive the reward according to the promotion product purchase (S730).

Next, after completely installing the application in the terminal 100 or executing the application which is installed in advance in the terminal 100, the terminal 100 receives the promotion product information provided from the server 300. Here, the promotion product information may be provided as a catalog and includes a manufacturer name, a promotion product name, a promotion product ID, a promotion product image, a store, a point providing company, an accumulated point amount, a discounted amount, a validation date, and a usage period.

Further, the terminal 100 displays the received promotion product information through the application.

For example, when the application is executed after completely installing the application in the terminal 100, the terminal 100 receives the promotion product information including a manufacturer name, a promotion product name (for example, a product A), a promotion product ID, a promotion product image, a store, a point providing company, an accumulated point amount, a discounted amount, a validation date, and a usage period which are provided from the server 300 and outputs the received promotion product response information (S740).

Next, the terminal 100 transmits the promotion product response information to the server 300 in response to the received promotion product information. Here, the promotion product response information includes a customer ID, a promotion product ID, an access route, an access location, and access time.

For example, the terminal 100 generates promotion product response information including a customer ID, a promotion product ID, an access route (a dedicated application or Internet), an access location, and access time in response to the received promotion product information and transmits the generated promotion product response information to the server 300 (S750).

Next, the server 300 receives the promotion product response information transmitted from the terminal 100 in response to the transmitted promotion product information.

Further, the server 300 transmits the product purchase reward information including the accumulated point amount, the discounted amount, or the store discount coupon amount through the access route included in the promotion product response information to the terminal 100 as a push message based on the received promotion product response information.

Further, the terminal 100 receives the product purchase reward information transmitted from the server 300 and displays the received product purchase reward information.

For example, the server 300 transmits the product purchase reward information including the point accumulation information to the terminal 100 through the access route (a dedicated application or an Internet) included in the received promotion product response information, as a push message. Further, the terminal 100 displays the product purchase reward information through the application which is installed in advance in the terminal 100 (S760).

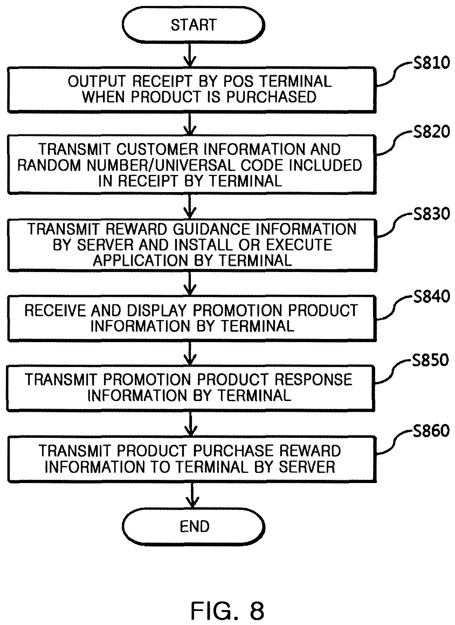

FIG. 8 is a flowchart illustrating a control method of a product selling system including a server according to a fourth exemplary embodiment of the present invention.

First, when the terminal 100 and the POS terminal 200 interwork with each other to perform a purchasing process on the promotion product, the POS terminal 200 outputs a receipt including guidance information, a random number or a universal code, and payment information. Further, the user (for example, a clerk in the store) of the POS terminal 200 provides the output receipt to the user of the terminal 100. Here, the guidance information includes information on a point accumulating method, information in point discount, information on a store discount coupon, information on an application downloading method related to the store, information on application benefit related to the store, information on an application downloading method of another company, and information on application benefit of another company.

For example, when the user of the terminal 100 visits a store equipped with a promotion product A to purchase (or make a payment for) the promotion product A, the POS terminal 200 outputs a receipt including guidance information including information on a point accumulating method for the promotion product A, a random number or a universal code for accumulating a point for the promotion product A, and payment information for the promotion product A and provides the output receipt to the user of the terminal 100 (S810).

Next, the terminal 100 transmits (or provides) the random number (or the universal code) and the customer information included in the receipt to the server 300 through the application which is installed in advance in the terminal 100. Here, the customer information includes a name, a phone number, a point card number, and identification information of the terminal 100.

For example, the terminal 100 receives the random number and the customer information included in the receipt through the application which is installed in the terminal 100 in accordance with user input of the terminal 100 who carries the receipt. Further, the terminal 100 transmits the random number and the customer information to the server 300 (S820).

Next, the server 300 receives the random number (or the universal code) and the customer information transmitted from the terminal 100.

Further, the server 300 transmits reward guidance information for providing a reward according to the promotion product purchase to the terminal 100 based on the customer information, as a push message.

Further, the terminal 100 receives the reward guidance information transmitted from the server 300 and displays the received reward guidance information. Further, the terminal 100 installs the application in the terminal or executes the application which is installed in advance in the terminal 100 by interworking with the server 300 to receive the reward according to the promotion product purchase based on the received reward guidance information.

For example, the server 300 transmits reward guidance information for providing a reward according to purchase of the promotion product A to the terminal 100 corresponding to the customer information, as a push message. Further, the terminal 100 installs the related application in the terminal 100 by interworking with the server 300 to receive the reward according to the promotion product purchase (S830).

Next, after completely installing the application in the terminal 100 or executing the application which is installed in advance in the terminal 100, the terminal 100 receives the promotion product information provided from the server 300. Here, the promotion product information may be provided as a catalog and includes a manufacturer name, a promotion product name, a promotion product ID, a promotion product image, a store, a point providing company, an accumulated point amount, a discounted amount, a validation date, and a usage period.

Further, the terminal 100 displays the received promotion product information through the application.

For example, when the application is executed after completely installing the application in the terminal 100, the terminal 100 receives the promotion product information including a manufacturer name, a promotion product name (for example, a product A), a promotion product ID, a promotion product image, a store, a point providing company, an accumulated point amount, a discounted amount, a validation date, and a usage period which are provided from the server 300 and outputs the received promotion product information (S840) .

Next, the terminal 100 transmits the promotion product response information to the server 300 in response to the received promotion product information. Here, the promotion product response information includes a customer ID, a promotion product ID, an access route, an access location, and access time.

For example, the terminal 100 generates promotion product response information including a customer ID, a promotion product ID, an access route (a dedicated application or Internet), an access location, and access time in response to the received promotion product information and transmits the generated promotion product response information to the server 300 (S850).

Next, the server 300 receives the promotion product response information transmitted from the terminal 100 in response to the transmitted promotion product information.

Further, the server 300 transmits the product purchase reward information including the accumulated point amount, the discounted amount, or the store discount coupon amount through the access route included in the promotion product response information to the terminal 100 as a push message based on the received promotion product response information.

Further, the terminal 100 receives the product purchase reward information transmitted from the server 300 and displays the received product purchase reward information.

For example, the server 300 transmits the product purchase reward information including the point accumulation information to the terminal 100 through the access route (a dedicated application or an Internet) included in the received promotion product response information, as a push message. Further, the terminal 100 displays the product purchase reward information through the application which is installed in advance in the terminal 100 (S860).

The terminal, the POS terminal and the server according to the embodiment of the present invention may be prepared with a computer program, and codes and code segments configuring the computer program may easily deduced by a computer programmer in the art. Further, the corresponding computer program is stored in a non-transitory computer readable storage medium, and read and executed by the terminal, the POS terminal, and the server according to the embodiment of the present invention to implement the terminal, the POS terminal, and the server.

The non-transitory computer readable storage medium includes a magnetic storage medium, an optical storage medium, and a carrier wave medium. The computer program implementing the terminal, the POS terminal, and the server according to the embodiment of the present invention may be stored and installed in embedded memories of the terminal, the POS terminal, the server, and the like. Alternatively, external memories such as a smart card storing and installing the computer program implementing the terminal, the POS terminal, and the server according to the embodiment of the present invention may be installed on the terminal, the POS terminal, the server, and the like through an interface.

According to the present invention, as described above, when a purchase intension on a promotion product is recognized in advance through a prior walk-in process or even when the promotion product is recognized without having a walk-in process, a reward function such as a point accumulating function, a discount function, or a discount coupon providing function is provided based on promotion product information purchased by the terminal, so that an advertiser provides reward only when a customer who is a promotion target surely recognized the product of the advertiser and purchases the product or the customer recognizes the product after purchasing the product so that the advertising effect is confirmed and is maximized. Further, the customer may be conveniently provided with the reward by removing cumbersome and inconvenient process such as a paper coupon or a receipt coupon.

Hereinabove, although the present invention is described by specific matters such as concrete components, and the like, embodiments, and drawings, they are provided only for assisting in the entire understanding of the present invention. Therefore, the present invention is not limited to the embodiments. Various modifications and changes may be made by those skilled in the art to which the present invention pertains from this description. Therefore, the spirit of the present invention should not be limited to the above-described embodiments, and the following claims as well as all modified equally or equivalently to the claims are intended to fall within the scope and spirit of the invention.

According to the present invention, when a purchase intension on a promotion product is recognized in advance through a prior walk-in process or even when the promotion product is recognized without having a walk-in process, a reward function such as a point accumulating function, a discount function, or a discount coupon providing function is provided based on promotion product information purchased by the terminal, so that an advertiser provides reward only when a customer who is a promotion target surely recognized the product of the advertiser and purchases the product or the customer recognizes the product after purchasing the product so that the advertising effect is confirmed and is maximized. Further, the customer may be conveniently provided with the reward by removing cumbersome and inconvenient process such as a paper coupon or a receipt coupon and can be widely used in an advertising field, a product sales field, a terminal field, a server field, and the like.

## Claims

1. A server, comprising:
a storage unit which stores a plurality of promotion product confirmation information transmitted from a plurality of terminals, respectively, in response to promotion product information which is provided to the plurality of terminals;
a communication unit which receives customer information and purchase information for a first terminal which are transmitted from a POS terminal when transaction of the promotion product is performed; and
a control unit which checks whether the received customer information is included in the plurality of promotion product confirmation information stored in the storage unit and controls the communication unit to transmit first product purchase reward information including at least one of an accumulated point amount, a discounted amount, and a store discount coupon amount through an access route included in the promotion product confirmation information corresponding to the customer information to the first terminal, as a push message when the customer information is included in the plurality of promotion product confirmation information as a checking result.

2. The server of claim 1, wherein the promotion product information includes at least one of a manufacturer name, a promotion product name, a promotion product ID, a promotion product image, a store, a point providing company, an accumulated point amount, a discounted amount, a validation date, and a usage period.

3. The server of claim 1, wherein the promotion product confirmation information includes at least one of a customer ID, a promotion product ID, an access route, an access location, and access time.

4. The server of claim 1, wherein the customer information includes at least one of a name, a phone number, a point card number, and identification information of the terminal.

5. The server of claim 1, wherein the purchase information includes at least one of a store, a promotion product ID, a receipt unique number, a purchasing time, and a customer ID.

6. The server of claim 1, wherein as a checking result, when the customer information is not included in the plurality of promotion product confirmation information, the control unit controls the communication unit to transmit reward guidance information for a reward according to a promotion product purchase to the first terminal based on the customer information as a push message.

7. The server of claim 6, wherein when a predetermined application is installed or executed in the first terminal, the control unit transmits the promotion product information formed by a catalog to the first terminal through the communication unit, receives the promotion product response information transmitted from the first terminal in response to the transmitted promotion product information through the communication unit, and transmits second product purchase reward information including at least one of the accumulated point amount, the discounted amount, and the store discount coupon amount through the access route included in the promotion product response information to the first terminal as a push message based on the received promotion product response information, through the communication unit,
the promotion product response information includes at least one of a customer ID, a promotion product ID, an access route, an access location, and access time, and
a benefit of the first product purchase reward information is higher than a benefit of the second product purchase reward information.

8. A control method of a server, the method comprising:
transmitting promotion product information to the terminal, by means of a communication unit;
receiving promotion product confirmation information transmitted from the terminal in response to the transmitted promotion product information, by means of the communication unit;
receiving customer information and purchase information for a first terminal which are transmitted from a POS terminal when transaction of the promotion product is performed, by means of the communication unit;
checking whether the received customer information is included in a plurality of promotion product confirmation information including the received promotion product confirmation information which is stored in advance in a storage unit, by means of the control unit; and
controlling the communication unit to transmit first product purchase reward information including at least one of an accumulated point amount, a discounted amount, and a store discount coupon amount through an access route included in the promotion product confirmation information corresponding to the customer information to the first terminal, as a push message, by means of the control unit, when the customer information is included in the plurality of promotion product confirmation information as a checking result.

9. The control method of claim 8, further comprising:
controlling the communication unit to transmit reward guidance information for a reward according to a promotion product purchase to the first terminal based on the customer information as a push message, by means of the control unit, when the customer information is not included in the plurality of promotion product confirmation information as the checking result;
transmitting the promotion product information formed by a catalog to the first terminal, by means of the communication unit, when a predetermined application is installed or executed in the first terminal;
receiving promotion product response information transmitted from the first terminal in response to the transmitted promotion product information, by means of the communication unit; and
controlling the communication unit to transmit second product purchase reward information including at least one of the accumulated point amount, the discounted amount, and the store discount coupon amount through the access route included in the promotion product response information to the first terminal as a push message based on the received promotion product response information, by means of the control unit.

10. A non-transitory computer readable storage medium having a computer program recorded thereon configured to perform the method of claim 8 or 9.

11. A server comprising:
a storage unit which stores a plurality of promotion product confirmation information transmitted respectively from a plurality of terminals, in response to promotion product information which is provided to the plurality of terminals;
a communication unit which receives a random number or a universal code included in a receipt issued from a POS terminal and customer information which are transmitted from a first terminal after performing transaction on a promotion product; and
a control unit which controls the communication unit to transmit product purchase reward information including at least one of an accumulated point amount, a discounted amount, and a store discount coupon amount through an access route included in the promotion product confirmation information corresponding to the customer information to the first terminal, as a push message, when the customer information is included in the plurality of promotion product confirmation information stored in the storage unit.

12. The server of claim 11, wherein the receipt further includes the guidance information including at least one of information on a point accumulating method, information in point discount, information on a store discount coupon, information on an application downloading method related to the store, information on application benefit related to the store, information on an application downloading method of another company, and information on application benefit of another company.
